# EUROPÄISCHE PATENTANMELDUNG

(11) **EP 1 566 616 A1**
(43) Veröffentlichungstag der Anmeldung: **24.08.2005**
(21) Anmeldenummer: 04030772.0
(22) Anmeldetag: 24.12.2004
(51) Int. Cl.: G01J 1/04

(54) **Sensoranordnung**

(30) Priorität: 20.02.2004 DE 102004008269
(71) Anmelder: Hella KGaA Hueck & Co., 59552 Lippstadt (DE)
(72) Erfinder: Heilenkötter, Carsten Dipl.-Ing., 28844 Weyhe (DE); Niemann, Thomas Dipl.-Ing., 27753 Delmenhorst (DE)
(74) Vertreter: Siekmann, Gunnar

(57) **Zusammenfassung**

Die Erfindung betrifft eine Sensoranordnung zum Bestimmen der Helligkeit mit einem Photosensor, wobei die Sensoranordnung einen Reflektor aufweist, der Photosensor und der Reflektor derart positioniert sind, daß vom Reflektor reflektiertes Licht auf den Photosensor trifft und der Reflektor derart beschaffen ist, daß ein sichtbarer Anteil des Umgebungslichtes reflektiert und ein infraroter Anteil des Umgebungslichtes transmittiert wird. Dadurch wird eine Sensoranordnung geschaffen, die dem Empfinden des menschlichen Auges nachgebildet ist und vergleichsweise einfach und preiswert herstellbar ist.

## Beschreibung

Die Erfindung betrifft eine Sensoranordnung zum Bestimmen der Helligkeit mit einem Photosensor. Insbesondere betrifft die Erfindung eine Sensoranordnung mit einer dem menschlichen Auge angepaßten spektralen Empfindlichkeit.

Derartige Sensoranordnungen, die eine dem menschlichen Empfinden proportionale Messung der Helligkeit des Umgebungslichtes ermöglichen, werden zum Beispiel in automatischen Steuerungen des Fahrlichtes in Kraftfahrzeugen eingesetzt. In der US 5,235,178 wird hierzu beispielsweise vorgeschlagen, eine Sensoranordnung mit einem Photosensor und einem diesem Photosensor vorgeschalteten Diffusor zu verwenden. Durch die bestimmte spektrale Empfindlichkeit des Photosensors und des Diffusors wird eine dem menschlichen Auge nachgebildete Empfindlichkeit erreicht. In ähnlicher Weise wird in der Druckschrift US 5,036,437 eine Sensoranordnung vorgeschlagen, bei der einem Photosensor ein Filter vorgeschaltet ist, der Teile des Lichtspektrums herausfiltert, um auf diese Weise eine dem menschlichen Auge angepaßte spektrale Empfindlichkeit zu erreichen.

In den Druckschriften EP 0 876 264 B1, DE 197 40 928 A1 und US 6,396,040 B1 werden Sensoranordnungen vorgeschlagen, bei denen mehrere Sensoren verwendet werden und deren Signale gemeinsam derart ausgewertet werden, daß im Ergebnis eine bestimmte spektrale Empfindlichkeit erreicht wird.

Der Erfindung liegt die Aufgabe zugrunde, eine Sensoranordnung der eingangs genannten Art zu schaffen, die besonders einfach aufgebaut und herstellbar ist.

Die Lösung dieser Aufgabe erfolgt mit einer Sensoranordnung mit den Merkmalen des Patentanspruchs 1. Vorteilhafte Weiterbildungen der Erfindung sind in den Unteransprüchen beschrieben.

Bei einer Sensoranordnung zum Bestimmen der Helligkeit mit einem Photosensor ist erfindungsgemäß ein Reflektor vorgesehen, und der Photosensor und der Reflektor sind derart positioniert, daß vom Reflektor reflektiertes Licht auf den Photosensor trifft. Weiterhin ist der Reflektor derart beschaffen, daß ein sichtbarer Anteil des Umgebungslichtes reflektiert und ein infraroter Anteil des Umgebungslichtes transmittiert wird.

Damit wird eine besonders einfache Möglichkeit und ein besonders einfacher Aufbau für eine Sensoranordnung geschaffen, mit der eine dem menschlichen Auge proportionale Messung der Helligkeit des Umgebungslichtes möglich ist.

Bevorzugt wird in der erfindungsgemäßen Sensoranordnung ein preiswerter Silicium-Photosensor eingesetzt. Dessen spektrale Empfindlichkeit ist besonders im infraroten Bereich weit über der spektralen Empfindlichkeit des menschlichen Auges. Durch die erfindungsgemäße Sensoranordnung wird es möglich, einen solchen Silicium-Photosensor einzusetzen. Der Reflektor ist dazu bevorzugt aus einem Kunststoff hergestellt. Es gibt eine Vielzahl von Materialien, insbesondere Kunststoff, die sichtbares Licht reflektieren und den infraroten Anteil des Lichtspektrums nahezu ungehindert passieren lassen, also dieser Lichtteil transmittiert wird. Die Sensoranordnung weist damit einen selektiven Reflektor auf, der den unsichtbaren infraroten Anteil nicht reflektiert, so daß er nicht zum Ausgangssignal des Photosensors beiträgt.

Die Sensoranordnung weist bevorzugt einen Bauteilträger mit einer Öffnung auf. Durch diese Öffnung kann Licht in den Bauteilträger eintreten. Der Reflektor ist dazu bevorzugt gegenüberliegend zu der im Bauteilträger vorgesehenen Öffnung angeordnet. Der Photosensor ist dabei günstigerweise benachbart zu der im Bauteilträger vorgesehenen Öffnung angeordnet. Photosensor und Reflektor liegen damit auf sich gegenüberliegenden Seiten des Bauteilträgers. Durch die Öffnung in den Bauteilträger eintretendes Licht wird auf der gegenüberliegenden Seite am Reflektor reflektiert und auf den Photosensor geworfen. Die Sensoranordnung kann auf diese Weise in einer sehr kleinen und einfach aufzubauenden geometrischen Anordnung gestaltet werden. Der Reflektor kann auch als eigenständiges Bauteil in dem Bauteilträger angeordnet werden. Bevorzugt ist es jedoch, eine Fläche des Bauteilträgers als Reflektor auszubilden. Insbesondere ist es günstig, den gesamten Bauteilträger aus einem Kunststoffmaterial herzustellen, der die gewünschten Reflektoreigenschaften aufweist.

Der Reflektor kann eben ausgebildet sein, bevorzugt ist der Reflektor jedoch mit einer bestimmten geformten Oberfläche, insbesondere mit einer konvexen Oberflächengestaltung ausgebildet, so daß auf diese Weise die Richtcharakteristik des Sensors beeinflußt wird. In einer anderen bevorzugten Weiterbildung der Erfindung ist der Bauteilträger als geschlossenes Gehäuse ausgebildet, so daß keine weiteren Bauteile benötigt werden.

In einer alternativen bevorzugten Ausgestaltung der Erfindung ist über dem Bauteilträger eine Abdeckung vorgesehen. Diese Abdeckung ist bevorzugt aus Kunststoff ausgebildet. Weiterhin ist in der Abdeckung günstigerweise mindestens ein optisches Element integriert, um damit die Richtcharakteristik der gesamten Sensoranordnung gezielt beeinflussen zu können. Alternativ kann die Abdeckung auch in konstanter Wandstärke ausgebildet sein.

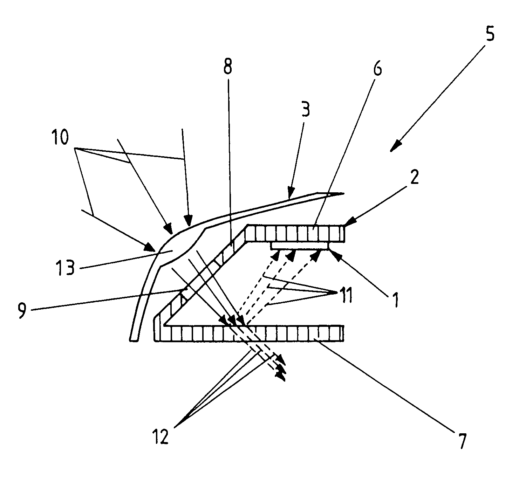

Nachfolgend wird die Erfindung anhand eines in der Zeichnung dargestellten Ausführungsbeispiels weiter erläutert. In der einzigen Figur der Zeichnung ist eine schematische Querschnittsansicht der erfindungsgemäßen Sensoranordnung dargestellt.

Die Sensoranordnung ist insgesamt mit 5 bezeichnet. Die Sensoranordnung weist ein Trägerelement 2 auf, das zwei sich gegenüberliegende Seiten 6 und 7 aufweist. Der Seite 6 ist noch eine leicht abgewinkelt ausgebildete Seite 8 zugeordnet, in der eine Öffnung 9 vorgesehen ist. Durch die Öffnung 9 fällt Licht auf die Seite 7 des Trägerelementes 2, an der ein Reflektor angeordnet ist bzw. die, wie im hier gezeigten Ausführungsbeispiels, vollständig als Reflektor ausgebildet ist. Auf der der Seite 7 gegenüberliegenden Seite 6 ist ein Sensorelement 1, das hier als Silicium-Photosensor ausgebildet ist, angeordnet. Das Trägerelement 2 ist einstückig aus einem Material ausgebildet. Die durch die Öffnung 9 einfallende Umgebungsstrahlung 10 wird an dem Reflektor reflektiert und ein reflektierter sichtbarer Anteil der Umgebungsstrahlung 11 wird auf das Sensorelement 1 reflektiert. Ein transmittierter infraroter Anteil der Umgebungsstrahlung 12 tritt durch den Reflektor, hier die Seite 7 des Trägerelementes 2, hindurch. Oberhalb des Trägerelementes 2 ist eine Abdeckung 3 angeordnet, die in einem der Öffnung 9 zugeordneten Bereich 13 geometrisch als ein optisches Element, hier als Sammellinse, ausgebildet ist, so daß ein höherer Anteil der Umgebungsstrahlung 10 konzentriert in die Öffnung 9 des Trägerelementes 2 gerichtet wird.

## Patentansprüche

1. Sensoranordnung zum Bestimmen der Helligkeit mit einem Photosensor (1),
**dadurch gekennzeichnet,**
**daß** die Sensoranordnung (5) einen Reflektor (7) aufweist,
**daß** der Photosensor (1) und der Reflektor (7) derart positioniert sind, daß vom Reflektor (7) reflektiertes Licht auf den Photosensor (1) trifft, und
**daß** der Reflektor (7) derart beschaffen ist, daß ein sichtbarer Anteil (11) des Umgebungslichtes reflektiert und ein anderer, insbesondere ein infraroter, Anteil (12) des Umgebungslichtes transmittiert wird.

2. Sensoranordnung nach Anspruch 1, **dadurch gekennzeichnet, daß** der Photosensor (1) ein Silicium-Photosensor ist.

3. Sensoranordnung nach einem der Ansprüche 1 oder 2, **dadurch gekennzeichnet, daß** der Reflektor (7) aus einem Kunststoff besteht.

4. Sensoranordnung nach einem der vorhergehenden Ansprüche, **dadurch gekennzeichnet, daß** die Sensoranordnung einen Bauteilträger (2) mit einer Öffnung (9) aufweist.

5. Sensoranordnung nach Anspruch 4, **dadurch gekennzeichnet, daß** der Reflektor (7) gegenüberliegend zu der im Bauteilträger (2) vorgesehenen Öffnung (9) angeordnet ist.

6. Sensoranordnung nach einem der Ansprüche 4 oder 5, **dadurch gekennzeichnet, daß** der Photosensor (1) benachbart zu der im Bauteilträger (2) vorgesehenen Öffnung (9) angeordnet ist.

7. Sensoranordnung nach einem der Ansprüche 4 bis 6, **dadurch gekennzeichnet, daß** eine Fläche (7) des Bauteilträgers als Reflektor ausgebildet ist.

8. Bauteilträger nach einem der vorhergehenden Ansprüche, **dadurch gekennzeichnet, daß** der Reflektor (7) eine konvexe Oberflächengestaltung aufweist.

9. Sensoranordnung nach einem der vorhergehenden Ansprüche, **dadurch gekennzeichnet, daß** der Bauteilträger (2) als geschlossenes Gehäuse ausgebildet ist.

10. Sensoranordnung nach einem der Ansprüche 1 bis 8, **dadurch gekennzeichnet, daß** über dem Bauteilträger (2) eine Abdeckung (3) vorgesehen ist.

11. Sensoranordnung nach Anspruch 10, **dadurch gekennzeichnet, daß** die Abdeckung (3) ein optisches Element (13) aufweist.
